# EUROPEAN PATENT APPLICATION

(11) **EP 3 812 203 A1**
(43) Date of publication of application: **28.04.2021**
(21) Application number: 20200742.3
(22) Date of filing: 08.10.2020
(51) Int. Cl.: B60L 58/10, B60L 50/61

(54) **CONTROL APPARATUS FOR VEHICLE**

(30) Priority: 25.10.2019 JP 2019194184
(71) Applicant: TOYOTA JIDOSHA KABUSHIKI KAISHA, Toyota-shi, Aichi-ken, 471-8571 (JP)
(72) Inventor: YAMAMOTO, Masafumi, Aichi-ken, 471-8571 (JP); TABATA, Atsushi, Aichi-ken, 471-8571 (JP); OKUDA, Koichi, Aichi-ken, 471-8571 (JP); SEKIGUCHI, Yoshito, Aichi-ken, 471-8571 (JP)
(74) Representative: J A Kemp LLP

(57) **Abstract**

A control apparatus (90, 110, 120) for a vehicle (10) includes: a program updating portion (112) configured to update a vehicle program (91) to a new program (202) received via a radio communication (R) from an external device (200) that is provided outside the vehicle (10); and a remaining-electric-energy reduction suppressing portion (96) configured, when there is a program update request requesting the vehicle program (91) to be updated to the new program (202), to execute a control for suppressing reduction of a remaining electric energy (Ebatr) remaining in a vehicle electric-storage device (54) configured to supply an update-consumed electric energy (Econud) that is an electric energy consumed when the vehicle program (91) is being updated to the new program (202).

## Description

### FIELD OF THE INVENTION

The present invention relates to a control apparatus for a vehicle, wherein the control apparatus is provided to update a vehicle program.

### BACKGROUND OF THE INVENTION

There is well-known a control apparatus for a vehicle, wherein the control apparatus is provided to update a vehicle program. A software updating system disclosed in JP2017-134506A is an example of such a control apparatus. The system disclosed in the Japanese Patent Application Publication includes a control apparatus provided in a vehicle and a server provided to communicate with the control apparatus via a network, and is configured to manage update of softwares of the control apparatus. In the disclosed system, based on information related to an electric energy required for the update of the softwares, the control apparatus calculates a threshold value of the electric energy by which it can be determined whether the update of the softwares can be made or not, so that the update of the softwares is not allowed when a remaining electric energy remaining in a vehicle battery is smaller than the calculated threshold value.

### SUMMARY OF THE INVENTION

By the way, in the software updating system disclosed in the above-identified Japanese Patent Application Publication, when the remaining electric energy remaining in the battery is small, the vehicle program is not updated even if a request requesting the update of the vehicle program is issued, so that there is a risk that opportunities for the update of the vehicle program could be reduced.

The present invention was made in view of the background art described above. It is therefore an object of the present invention to provide a control apparatus for a vehicle, wherein the control apparatus is capable of increasing opportunities for the update of the vehicle program when there is the request requesting the update of the vehicle program.

The object indicated above is achieved according to the following aspects of the present invention.

According to a first aspect of the invention, there is provided a control apparatus for a vehicle, the control apparatus comprising: a program updating portion configured to update a vehicle program to a new program (that may be referred also to as a new vehicle program) received via a radio communication from an external device that is provided outside the vehicle; and a remaining-electric-energy reduction suppressing portion configured, when there is a program update request requesting the vehicle program to be updated to the new program, to execute a control for suppressing reduction of a remaining electric energy remaining in a vehicle electric-storage device configured to supply an update-consumed electric energy that is an electric energy consumed when the vehicle program is being updated to the new program. It is noted that the vehicle program may be interpreted as a program in accordance with which control operations are to be executed in the vehicle.

According to a second aspect of the invention, in the control apparatus according to the first aspect of the invention, there is further provided a remaining-electric-energy determining portion configured, when there is the program update request requesting the vehicle program to be updated to the new program, to determine whether the remaining electric energy remaining in the vehicle electric-storage device is not smaller than an update-required remaining electric energy that includes the update-consumed electric energy that is required when the vehicle program is to be updated to the new program, wherein the remaining-electric-energy reduction suppressing portion is configured to execute the control for suppressing the reduction of the remaining electric energy, when the remaining-electric-energy determining portion determines that the remaining electric energy is smaller than the update-required remaining electric energy.

According to a third aspect of the invention, in the control apparatus according to the second aspect of the invention, the remaining-electric-energy determining portion is configured to calculates an estimated value of the remaining electric energy that is changed depending on a running route of the vehicle and operations made by a driver of the vehicle, wherein the remaining-electric-energy determining portion is configured to use the estimated value of the remaining electric energy at a point of time of start of update of the vehicle program to the new program, as the remaining electric energy that is to be compared with the update-required remaining electric energy.

According to a fourth aspect of the invention, in the control apparatus according to the second or third aspect of the invention, the remaining-electric-energy determining portion is configured to calculate an estimated value of the update-consumed electric energy, based on an amount of update data in the new program, and to calculate, as the update-required remaining electric energy, a value obtained by adding the estimated value of the update-consumed electric energy to a normally-required remaining electric energy that is the remaining electric energy required in a normal case without the program update request requesting the vehicle program to be updated to the new program.

According to a fifth aspect of the invention, in the control apparatus according to the fourth aspect of the invention, the remaining-electric-energy reduction suppressing portion is configured to execute the control for suppressing the reduction of the remaining electric energy, by changing a target value of the remaining electric energy, from the normally-required remaining electric energy to the update-required remaining electric energy, and controlling the remaining electric energy such that an actual value of the remaining electric energy is not smaller than the target value of the remaining electric energy.

According to a sixth aspect of the invention, in the control apparatus according to any one of the first through fourth aspects of the invention, wherein the remaining-electric-energy reduction suppressing portion is configured to execute the control for suppressing the reduction of the remaining electric energy, by inhibiting a motor running of the vehicle using an output torque of a vehicle electric motor that is to be driven by an electric power outputted from the vehicle electric-storage device, or by limiting a region of the motor running, namely, limiting a region in which the motor running is allowed.

According to a seventh aspect of the invention, in the control apparatus according to any one of the first through fourth aspects of the invention, the remaining-electric-energy reduction suppressing portion is configured to execute the control for suppressing the reduction of the remaining electric energy, by increasing an electric power generated by a vehicle electric generator that is configured to charge the vehicle electric-storage device, to an amount larger than in a case without the program update request requesting the vehicle program to be updated to the new program.

According to an eighth aspect of the invention, in the control apparatus according to any one of the first through fourth aspects of the invention, the remaining-electric-energy reduction suppressing portion is configured to execute the control for suppressing the reduction of the remaining electric energy, by inhibiting an idling stop control that is to be executed to temporarily stop an operation of an engine which is a vehicle drive-force source and which is to be operated to drive a vehicle electric generator so as to charge the vehicle electric-storage device with an electric power generated by the vehicle electric generator.

According to a ninth aspect of the invention, in the control apparatus according to any one of the first through eighth aspects of the invention, the program updating portion is configured to update the vehicle program to the new program, when the vehicle is stopped and is placed in a state in which a drive torque is not generatable by the vehicle, wherein the remaining-electric-energy reduction suppressing portion is configured to execute the control for suppressing the reduction of the remaining electric energy, after the program update request has been issued and before update of the vehicle program is started.

In the control apparatus according to the first aspect of the invention, when there is the program update request requesting the vehicle program to be updated to the new data received via the radio communication from the external device, the control is executed for suppressing reduction of the remaining electric energy remaining in the vehicle electric-storage device configured to supply the update-consumed electric energy. Therefore, it is possible to avoid shortage of the remaining electric energy remaining in the vehicle electric-storage device during execution of the update of the vehicle program. That is, it is possible to avoid the execution of the update of the vehicle program from being suspended due to the shortage of the remaining electric energy remaining in the vehicle electric-storage device. Consequently, it is possible to increase opportunities for the update of the vehicle program when there is the program update request requesting the update of the vehicle program.

In the control apparatus according to the second aspect of the invention, when it is determined that there is the program update request requesting the vehicle program to be updated and that the remaining electric energy remaining in the vehicle electric-storage device is smaller than the update-required remaining electric energy, the control is executed for suppressing reduction of the remaining electric energy remaining in the vehicle electric-storage device. Therefore, it is possible to appropriately avoid shortage of the remaining electric energy remaining in the vehicle electric-storage device during execution of the update of the vehicle program.

In the control apparatus according to the third aspect of the invention, the estimated value of the remaining electric energy, which is changed depending on the running route of the vehicle and operations made by the driver of the vehicle, is calculated, and the estimated value of the remaining electric energy at the point of time of the start of the update of the vehicle program is calculated to be used as the remaining electric energy that is to be compared with the update-required remaining electric energy. Thus, when it is determined that the estimated value of the remaining electric energy at the point of time of the start of the update of the vehicle program is smaller than the update-required remaining electric energy, the control is executed for suppressing reduction of the remaining electric energy remaining in the vehicle electric-storage device. Owing to this control arrangement, it is possible to more appropriately avoid shortage of the remaining electric energy remaining in the vehicle electric-storage device during execution of the update of the vehicle program.

In the control apparatus according to the fourth aspect of the invention, the estimated value of the update-consumed electric energy is calculated, and the update-required remaining electric energy is calculated by adding the estimated value of the update-consumed electric energy to the normally-required remaining electric energy. Owing to this control arrangement, it is possible to more appropriately avoid shortage of the remaining electric energy remaining in the vehicle electric-storage device during execution of the update of the vehicle program.

In the control apparatus according to the fifth aspect of the invention, the control is executed for suppressing the reduction of the remaining electric energy of the vehicle electric-storage device, by controlling the remaining electric energy such that the actual value of the remaining electric energy is not smaller than the target value of the remaining electric energy that has been changed from the normally-required remaining electric energy to the update-required remaining electric energy. Thus, it is possible to appropriately suppress reduction of the remaining electric energy of the vehicle electric-storage device.

In the control apparatus according to the sixth aspect of the invention, the control is executed for suppressing the reduction of the remaining electric energy of the vehicle electric-storage device, by inhibiting the motor running of the vehicle or by limiting the region of the motor running. Thus, it is possible to appropriately suppress reduction of the remaining electric energy of the vehicle electric-storage device.

In the control apparatus according to the seventh aspect of the invention, the control is executed for suppressing the reduction of the remaining electric energy of the vehicle electric-storage device, by increasing the electric power generated by the vehicle electric generator that is configured to charge the vehicle electric-storage device, to an amount larger than in the case without the program update request requesting the vehicle program to be updated. Thus, it is possible to appropriately suppress reduction of the remaining electric energy of the vehicle electric-storage device.

In the control apparatus according to the eighth aspect of the invention, the control is executed for suppressing the reduction of the remaining electric energy of the vehicle electric-storage device, by inhibiting the idling stop control of the engine. Thus, it is possible to appropriately suppress reduction of the remaining electric energy of the vehicle electric-storage device.

In the control apparatus according to the ninth aspect of the invention, the update of the vehicle program is executed when the vehicle is stopped and is placed in the state in which the drive torque is not generatable by the vehicle, and the control is executed for suppressing the reduction of the remaining electric energy of the vehicle electric-storage device, after the program update request has been issued and before the update of the vehicle program is started. Therefore, it is possible to avoid shortage of the remaining electric energy remaining in the vehicle electric-storage device during execution of the update of the vehicle program during stop of the vehicle during which the remaining electric energy of the vehicle electric-storage device could be insufficient.

### BRIEF DESCRIPTION OF THE DRAWINGS

FIG. 1 is a view schematically showing a construction of a vehicle to which the present invention is applied, for explaining major portions of control functions and control systems that are provided to perform various control operations in the vehicle;
FIG. 2 is a table indicating a relationship between each gear position of a mechanically-operated step-variable transmission portion and a combination of engagement devices of the step-variable transmission portion, which are to be placed in engaged states to establish the gear position in the vehicle of FIG. 1;
FIG. 3 is a collinear chart indicating a relationship among rotational speeds of rotary elements of an electrically-controlled continuously-variable transmission portion and the mechanically-operated step-variable transmission portion;
FIG. 4 is a view showing, by way of example, an arrangement for updating a vehicle program via a radio communication;
FIG. 5 is a view showing, by way of examples, a shifting map used for controlling gear shifting in the step-variable transmission portion, a drive-force-source switching map used for switching between a hybrid running and a motor running, and a relationship between the shifting map and the drive-force-source switching map;
FIG. 6 is a view for explaining, by way of example, an SOC target value upon data update; and
FIG. 7 is a flow chart showing a main part of a control routine executed by an electronic control apparatus and a first gateway ECU, namely, a control routine that is executed for increasing opportunities for update of a vehicle program when there is a request requesting the update of the vehicle program.

### DETAILED DESCRIPTION OF PREFERRED EMBODIMENT

In the embodiment of the present invention, the vehicle includes a drive force source and a drive-force transmitting device. The drive-force transmitting device includes the vehicle transmission. A gear ratio in the vehicle transmission is defined as "rotational speed of input-side rotary member / rotational speed of output-side rotary member". A running speed of the vehicle could be lower as the gear ratio is higher, and could be higher as the gear ratio is lower. The highest gear ratio can be expressed also as a lowest-speed gear ratio.

The drive force source is the above-described engine as an internal combustion engine such as gasoline engine and diesel engine, which is configured to generate a drive force by combustion of a fuel. Further, the vehicle may include, for example, an electric motor as another drive force source in addition to or in place of the engine. The electric motor is broadly interpreted as a kind of an engine.

Hereinafter, preferred embodiment of the invention will be described in detail with reference to the accompanying drawings.

### EMBODIMENT

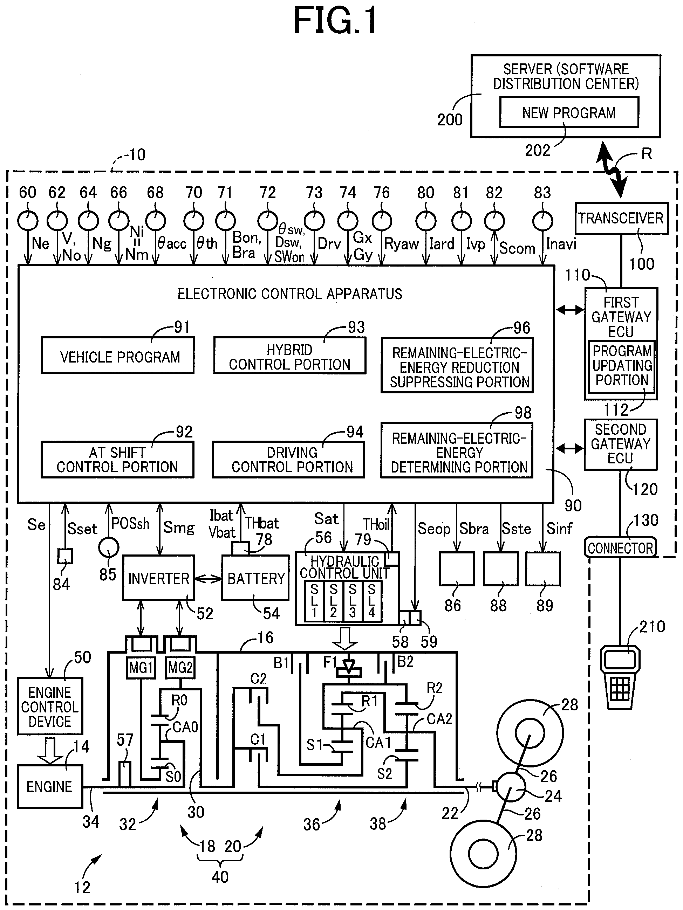

FIG. 1 is a view schematically showing a construction of a drive-force transmitting device 12 provided in a vehicle 10 to which the present invention is applied, for explaining major portions of control functions and control systems that are provided to perform various control operations in the vehicle 10. As shown in FIG. 1, the vehicle 10 includes an engine 14 and first and second rotating machines MG1, MG2. The drive-force transmitting device 12 includes a non-rotary member in the form of a transmission casing 16 that is attached to a body of the vehicle 10, an electrically-operated continuously-variable transmission portion 18 and a mechanically-operated step-variable transmission portion 20. The continuously-variable transmission portion 18 and the step-variable transmission portion 20 are provided within the casing 16, and are arranged in a series on a common axis. The continuously-variable transmission portion 18 is connected to the engine 14 directly or indirectly through, for example, a damper (not shown). The step-variable transmission portion 20 is connected to an output rotary member of the continuously-variable transmission portion 18. The drive-force transmitting device 12 further includes a differential gear device 24 connected to an output shaft 22 that is an output rotary member of the step-variable transmission portion 20, and a pair of axles 26 connected to the differential gear device 24. In the drive-force transmitting device 12, a drive force outputted from the engine 14 or the second rotating machine MG2 is transmitted to the step-variable transmission portion 20, and is then transmitted from the step-variable transmission portion 20 through the differential gear device 24 to drive wheels 28 of the vehicle 10, for example. The drive force is synonymous with a drive torque or a drive power unless otherwise distinguished from them. It is noted that the drive-force transmitting device 12 including the continuously-variable transmission portion 18 and the step-variable transmission portion 20 is constructed substantially symmetrically about its axis corresponding to the above-described common axis, so that a lower half of the drive-force transmitting device 12 is not shown in FIG. 1. The above-described common axis corresponds to axes of a crank shaft of the engine 14 and a connecting shaft 34 that is described below.

The engine 14 is a known internal combustion engine such as gasoline engine and diesel engine, which serves as a vehicle drive-force source capable of generating a drive torque. The vehicle 10 is provided with an engine control device 50 that includes a throttle actuator, a fuel injection device and an ignition device. With the engine control device 50 being controlled by an electronic control apparatus 90 that is described below, an engine torque Te, which is an output torque of the engine 14, is controlled. In the present embodiment, the engine 14 is connected to the continuously-variable transmission portion 18, without a fluid transmitting device (such as a torque converter and a fluid coupling device) disposed therebetween.

Each of the first and second rotating machines MG1, MG2 is a rotating electric machine having a function serving as an electric motor and a function serving as a generator. That is, each of the first and second rotating machines MG1, MG2 is a so-called "motor generator". The first and second rotating machines MG1, MG2 are connected to a battery 54 provided in the vehicle 10, through an inverter 52 provided in the vehicle 10. The inverter 52 is controlled by the electronic control apparatus 90 whereby an MG1 torque Tg and an MG2 torque Tm as output torques of the respective first and second rotating machines MG1, MG2 are controlled. The output torque of each of the first and second rotating machines MG1, MG2 serves as a power running torque when acting as a positive torque for acceleration, with the each of the first and second rotating machines MG1, MG2 being rotated in a forward direction. The output torque of each of the first and second rotating machines MG1, MG2 serves as a regenerative torque when acting as a negative torque for deceleration, with the each of the first and second rotating machines MG1, MG2 being rotated in the forward direction. The battery 54 is a vehicle electric-storage device to and from which an electric power is supplied from and to the first rotating machine MG1 and the second rotating machine MG2.

The continuously-variable transmission portion 18 is provided with: the above-described first rotating machine (first motor/generator) MG1; a differential mechanism 32 serving as a drive-force distributing device to mechanically distribute the drive force of the engine 14 to the first rotating machine MG1 and to an intermediate transmitting member 30 that is an output rotary member of the continuously-variable transmission portion 18; and a second rotating machine (second motor/generator) MG2 connected to the intermediate transmitting member 30 in a drive-force transmittable manner. The continuously-variable transmission portion 18 is an electrically-controlled continuously-variable transmission wherein a differential state of the differential mechanism 32 is controllable by controlling an operation state of the first rotating machine MG1. The first rotating machine MG1 serves as a differential rotating machine capable of controlling an engine rotational speed Ne that is a rotational speed of the engine 14. The second rotating machine MG2 serves as a vehicle-driving rotating machine, i.e., a vehicle drive-force source capable of generating a drive torque driving the vehicle 10. The vehicle 10 is a hybrid vehicle provided with the drive force sources in the form of the engine 14 and the second rotating machine MG2. The drive force of each of the drive forces is to be transmitted to the drive wheels 28 through the drive-force transmitting device 12. It is noted that an operation of the first rotating machine MG1 is controlled by controlling an operation state of the first rotating machine MG1.

The differential mechanism 32 is a planetary gear device of a single-pinion type having a sun gear S0, a carrier CAO and a ring gear R0. The carrier CAO is connected to the engine 14 through the connecting shaft 34 in a drive-force transmittable manner, and the sun gear S0 is connected to the first rotating machine MG1 in a drive-force transmittable manner, while the ring gear R0 is connected to the second rotating machine MG2 in a drive-force transmittable manner. In the differential mechanism 32, the carrier CAO serves as an input rotary element, and the sun gear S0 serves as a reaction rotary element, while the ring gear R0 serves as an output rotary element.

The step-variable transmission portion 20 is a mechanically-operated transmission mechanism which constitutes a part of a drive-force transmitting path between the intermediate transmitting member 30 and the drive wheels 28, namely, constitutes a part of a drive-force transmitting path between the continuously-variable transmission portion 18 and the drive wheels 28. The intermediate transmitting member 30 also serves as an input rotary member of the step-variable transmission portion 20. The step-variable transmission portion 20 is considered also as a vehicle transmission constituting a part of a drive-force transmitting path between the drive force source (second rotating machine MG2 or engine 14) and the drive wheels 28, since the second rotating machine MG2 is connected to the intermediate transmitting member 30 such that the intermediate transmitting member 30 is rotated together with the second rotating machine MG2, or since the engine 14 is connected to an input rotary member of the continuously-variable transmission portion 18. The intermediate transmitting member 30 is a transmitting member through which the drive force of the drive force source is to be transmitted to the drive wheels 28. The step-variable transmission portion 20 is a known automatic transmission of a planetary gear type which is provided with a plurality of planetary gear devices in the form of a first planetary gear device 36 and a second planetary gear device 38, and a plurality of engagement devices including a clutch C1, a clutch C2, a brake B1 and a brake B2. Hereinafter, the clutch C1, clutch C2, brake B1 and brake B2 will be referred to as engagement devices CB unless otherwise specified.

Each of the engagement devices CB is a hydraulically-operated frictional engagement device in the form of a multiple-disc type or a single-disc type clutch or brake that is to be pressed by a hydraulic actuator, or a band brake that is to be tightened by a hydraulic actuator. The engagement devices CB are to be selectively placed in engaged, slipped or released state as their operation states, with their torque capacities being controlled or changed by their engaging pressures as regulated pressures outputted from, for example, respective solenoid valves SL1-SL4 provided in a hydraulic control unit (hydraulic control circuit) 56 that is provided in the vehicle 10.

In the step-variable transmission portion 20, selected ones of rotary elements of the first and second planetary gear devices 36, 38 are connected to each other or to the intermediate transmitting member 30, casing 16 or output shaft 22, either directly or indirectly through the engagement devices CB or a one-way clutch F1. The rotary elements of the first planetary gear device 36 are a sun gear S1, a carrier CA1 and a ring gear R1. The rotary elements of the second planetary gear device 38 are a sun gear S2, a carrier CA2 and a ring gear R2.

The step-variable transmission portion 20 is shifted to a selected one of a plurality of AT gear positions (speed positions) by engaging actions of selected ones of the engagement devices CB. The plurality of AT gear positions have respective different gear ratios (speed ratios) yat (= AT input rotational speed Ni / AT output rotational speed No). Namely, the step-variable transmission portion 20 is shifted up and down from one gear position to another by placing selected ones of the engagement devices in the engaged state. The step-variable transmission portion 20 is a step-variable automatic transmission configured to establish a selected one a plurality of gear positions. In the following description of the present embodiment, the gear position established in the step-variable transmission portion 20 will be referred to as AT gear position. The AT input rotational speed Ni is an input rotational speed of the step-variable transmission portion 20 that is a rotational speed of the input rotary member of the step-variable transmission portion 20, which is equal to a rotational speed of the intermediate transmitting member 30, and which is equal to an MG2 rotational speed Nm that is an rotational speed of the second rotating machine MG2. Thus, the AT input rotational speed Ni can be represented by the MG2 rotational speed Nm. The AT output rotational speed No is a rotational speed of the output shaft 22 that is an output rotational speed of the step-variable transmission portion 20, which is considered to be an output speed of a transmission device (composite transmission) 40 which consists of the continuously-variable transmission portion 18 and the step-variable transmission portion 20. The transmission device 40 is a transmission that constitutes a part of a drive-force transmitting path between the engine 14 and the drive wheels 28.

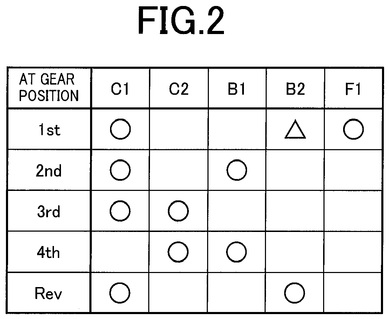

As shown in a table of FIG. 2, the step-variable transmission portion 20 is configured to establish a selected one of a plurality of AT gear positions in the form of four forward AT gear positions and a reverse AT gear position. The four forward AT gear positions consist of a first speed AT gear position, a second speed AT gear position, a third speed AT gear position and a fourth speed AT gear position, which are represented by "1st", "2nd", "3rd" and "4th" in the table of FIG. 2. The first speed AT gear position is the lowest-speed gear position having a highest gear ratio yat, while the fourth speed AT gear position is the highest-speed gear position having a lowest gear ratio yat. The gear ratio yat decreases in the direction from the first speed AT gear position (lowest-speed gear position) toward the fourth speed AT gear position (highest-speed gear position). The reverse AT gear position is represented by "Rev" in the table of FIG. 2, and is established by, for example, engagements of the clutch C1 and the brake B2. That is, when the vehicle 10 is to run in reverse direction, the first speed AT gear position is established, for example, as described below. The table of FIG. 2 indicates a relationship between each of the AT gear positions of the step-variable transmission portion 20 and operation states of the respective engagement devices CB of the step-variable transmission portion 20, namely, a relationship between each of the AT gear positions and a combination of ones of the engagement devices CB, which are to be placed in theirs engaged states to establish the each of the AT gear positions. In the table of FIG. 2, "O" indicates the engaged state of the engagement devices CB, "Δ" indicates the engaged state of the brake B2 during application of an engine brake to the vehicle 10 or during a coasting shift-down action of the step-variable transmission portion 20, and the blank indicates the released state of the engagement devices CB.

The step-variable transmission portion 20 is configured to switch from one of the AT gear positions to another one of the AT gear positions, namely, to establish one of the AT gear positions which is selected, by the electronic control apparatus 90, according to, for example, an accelerating operation made by a vehicle driver (operator) and the vehicle running speed V. The step-variable transmission portion 20 is shifted up or down from one of the AT gear positions to another, for example, by so-called "clutch-to-clutch" shifting operation that is made by releasing and engaging actions of selected two of the engagement devices CB, namely, by a releasing action of one of the engagement devices CB and an engaging action of another one of the engagement devices CB. In the following description of the present embodiment, a shift down action from the second speed AT gear position to the first speed AT gear position will be referred to as shift down action from 2nd to 1st. The other shift down and up actions will be referred in the same way.

The vehicle 10 further includes an MOP 57 that is a mechanically-operated oil pump and an EOP 58 that is an electrically-operated oil pump. The MOP 57 is connected to the connecting shaft 34, and is to be rotated together with rotation of the engine 14, so as to output a working fluid OIL that is to be used in the drive-force transmitting device 12. The EOP 58 is to be orated by a motor 59 which is provided in the vehicle 10 and which serves exclusively for the EOP 58, so as to output the working fluid OIL. The working fluid OIL outputted by the MOP 57 and the EOP 58 is used for switching the operation state of each of the engagement devices CB in the step-variable transmission portion 20.

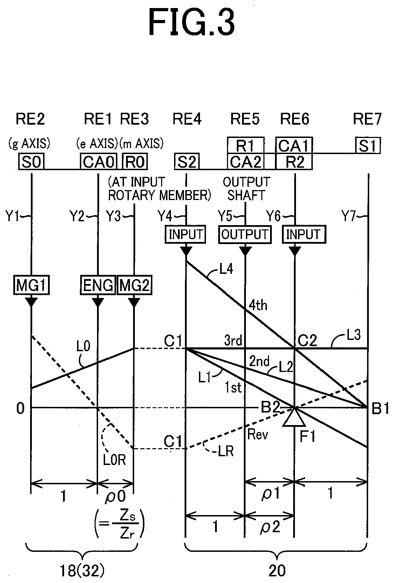

Fig. 3 is a collinear chart representative of a relative relationship of rotational speeds of the rotary elements in the continuously-variable transmission portion 18 and the step-variable transmission portion 20. In Fig. 3, three vertical lines Y1, Y2, Y3 corresponding to the three rotary elements of the differential mechanism 32 constituting the continuously-variable transmission portion 18 are a g-axis representative of the rotational speed of the sun gear S0 corresponding to a second rotary element RE2, an e-axis representative of the rotational speed of the carrier CAO corresponding to a first rotary element RE1, and an m-axis representative of the rotational speed of the ring gear R0 corresponding to a third rotary element RE3 (i.e., the input rotational speed of the step-variable transmission portion 20) in order from the left side. Four vertical lines Y4, Y5, Y6, Y7 of the step-variable transmission portion 20 are axes respectively representative of the rotational speed of the sun gear S2 corresponding to a fourth rotary element RE4, the rotational speed of the ring gear R1 and the carrier CA2 connected to each other and corresponding to a fifth rotary element RE5 (i.e., the rotational speed of the output shaft 22), the rotational speed of the carrier CA1 and the ring gear R2 connected to each other and corresponding to a sixth rotary element RE6, and the rotational speed of the sun gear S1 corresponding to a seventh rotary element RE7 in order from the left. An interval between the vertical lines Y1, Y2, Y3 is determined in accordance with a gear ratio ρ0 of the differential mechanism 32. An interval between the vertical lines Y4, Y5, Y6, Y7 is determined in accordance with gear ratios ρ1, ρ2 of the first and second planetary gear devices 36, 38. When an interval between the sun gear and the carrier is set to an interval corresponding to "1" in the relationship between the vertical axes of the collinear chart, an interval corresponding to the gear ratio p (= the number Zs of teeth of the sun gear / the number Zr of teeth of the ring gear) of the planetary gear device is set between the carrier and the ring gear.

In representation using the collinear chart of Fig. 3, in the differential mechanism 32 of the continuously-variable transmission portion 18, the engine 14 (see "ENG" in Fig. 3) is connected to the first rotary element RE1; the first rotating machine MG1 (see "MG1" in Fig. 3) is connected to the second rotary element RE2; the second rotating machine MG2 (see "MG2" in Fig. 3) is connected to the third rotary element RE3 that is to be rotated integrally with the intermediate transmitting member 30; and therefore, the rotation of the engine 14 is transmitted via the intermediate transmitting member 30 to the step-variable transmission portion 20. In the continuously-variable transmission portion 18, the relationship between the rotational speed of the sun gear S0 and the rotational speed of the ring gear R0 is indicated by straight lines L0 and L0R crossing the vertical line Y2.

In the step-variable transmission portion 20, the fourth rotary element RE4 is selectively connected through the clutch C1 to the intermediate transmitting member 30; the fifth rotary element RE5 is connected to the output shaft 22; the sixth rotary element RE6 is selectively connected through the clutch C2 to the intermediate transmitting member 30 and selectively connected through the brake B2 to the casing 16; and the seventh rotary element RE7 is selectively connected through the brake B1 to the casing 16. In the step-variable transmission portion 20, the rotational speeds of "1st", "2nd", "3rd", "4th", and "Rev" of the output shaft 22 are indicated by respective straight lines L1, L2, L3, L4, LR crossing the vertical line Y5 in accordance with engagement/release control of the engagement devices CB.

The straight line L0 and the straight lines L1, L2, L3, L4 indicated by solid lines in Fig. 3 indicate the relative speeds of the rotary elements during forward running in a hybrid running mode enabling a hybrid running in which at least the engine 14 is used as the drive force source for driving the vehicle 10. In this hybrid running mode, when a reaction torque, i.e., a negative torque from the first rotating machine MG1, is inputted in positive rotation to the sun gear S0 with respect to the engine torque Te inputted to the carrier CAO in the differential mechanism 32, an engine direct transmission torque Td [= Te/(1+ρ0) = - (1/ρ0)×Tg] appears in the ring gear R0 as a positive torque in positive rotation. A combined torque of the engine direct transmission torque Td and the MG2 torque Tm is transmitted as the drive torque of the vehicle 10 in the forward direction depending on a required drive force to the drive wheels 28 through the step-variable transmission portion 20 having any AT gear position formed out of the AT first to AT fourth gear positions. In this case, the first rotating machine MG1 functions as an electric generator generating a negative torque in positive rotation. A generated electric power Wg of the first rotating machine MG1 is stored in the battery 54 or consumed by the second rotating machine MG2. The second rotating machine MG2 outputs the MG2 torque Tm by using all or a part of the generated electric power Wg or using the electric power from the battery 54 in addition to the generated electric power Wg. Therefore, the engine 14 is capable of driving the first rotating machine MG1 so as to cause the first rotating machine MG1 to generate the electric power with which the battery 54 is to be charged.

In the differential mechanism 32 during a motor running mode in which the vehicle 10 is driven with a drive force generated by the second motor/generator MG2 operated as a drive power source while the engine 14 is stopped (held at rest), the carrier CAO is held stationary while the MG2 torque Tm that is a positive torque is applied to the ring gear R0 and rotating the ring gear R0 in the positive direction. The state of the differential mechanism 32 in this motor running mode is not shown in the collinear chart of FIG. 3. At this time, the first motor/generator MG1 connected to the sun gear S0 is placed in a non-load state and freely rotatable in the negative direction. Namely, in the motor running mode, the engine 14 is held in its non-operated state, so that an rotating speed ωe of the engine 14 (engine rotating speed ωe) is kept zero, and the vehicle 10 is driven in the forward direction with the MG2 torque Tm (positive forward driving torque), which is transmitted as a forward drive torque to the drive wheels 28 through the step-variable transmission portion 20 placed in one of the first through fourth speed AT gear positions. During the forward running in the motor running mode, the MG2 torque Tm is a power running torque that is a positive torque in positive rotation. A motor running in the motor running mode is a running of the vehicle 10, which is made with use of the output torque of the second rotating machine MG2 that is to be driven by an output electric power Wbout of the battery 54. The second rotating machine MG2 correspond to "vehicle electric motor" recited in the appended claims.

The straight lines L0R and LR indicated by broken lines in Fig. 3 indicate the relative speeds of the rotary elements in reverse running in the motor running mode. During reverse running in this motor running mode, the MG2 torque Tm is inputted to the ring gear R0 as a negative torque in negative rotation, and the MG2 torque Tm is transmitted as the drive torque of the vehicle 10 in a reverse direction to the drive wheels 28 through the step-variable transmission portion 20 in which the AT first gear position is established. The vehicle 10 can perform the reverse running when the electronic control apparatus 90 causes the second rotating machine MG2 to output a reverse MG2 torque Tm having a positive/negative sign opposite to a forward MG2 torque Tm during forward running while a forward low-side AT gear position, for example, the AT first gear position, is established as one the plurality of AT gear positions. During the reverse running in the motor running mode, the MG2 torque Tm is a power running torque that is a negative torque in negative rotation. In this case, the forward MG2 torque Tm is a power running torque that is a positive torque in positive direction, and the reverse MG2 torque Tm is a power running torque that is a negative torque in negative direction. In this way, the vehicle 10 performs the reverse running by inverting positiveness/negativeness of the MG2 torque Tm with the forward AT gear position. Using the forward AT gear position means using the same AT gear position as when the forward running is performed. Even in the hybrid running mode, the reverse running can be performed as in the motor running mode since the second rotating machine MG2 can be rotated in negative direction as indicated by the straight line L0R.

In the drive-force transmitting device 12, the continuously-variable transmission portion 18 constitutes an electric transmission mechanism that includes the differential mechanism 32 having three rotary elements, wherein the three rotary elements consist of the first rotary element RE1 in the form of the carrier CAO to which the engine 14 is connected in a drive-force transmittable manner, the second rotary element RE2 in the form of the sun gear S0 to which the first rotating machine MG1 is connected in a drive-force transmittable manner, and the third rotary element RE3 in the form of the ring gear R0 to which the intermediate transmitting member 30 is connected, and wherein the differential state of the differential mechanism 32 is controlled by controlling the operation state of the first rotating machine MG1. From another viewpoint, the third rotary element RE3 having the intermediate transmitting member 30 connected thereto is the third rotary element RE3 to which the second rotating machine MG2 is connected in a drive-force transmittable manner. That is, in the drive-force transmitting device 12, the continuously-variable transmission portion 18 has the differential mechanism 32 to which the engine 14 is connected in a drive-force transmittable manner and the first rotating machine MG1 connected to the differential mechanism 32 in a drive-force transmittable manner, such that the differential state of the differential mechanism 32 is controlled by controlling the operation state of the first rotating machine MG1. The continuously-variable transmission portion 18 is operated as an electric continuously variable transmission driven to change a gear ratio γ0 (=Ne/Nm) that is a ratio of the engine rotational speed Ne to the MG2 rotational speed Nm, wherein the engine rotational speed Ne is equal to the rotational speed of the connecting shaft 34 serving as an input rotary member of the continuously-variable transmission portion 18 while the MG2 rotational speed Nm is equal to the rotational speed of the intermediate transmitting member 30 serving as an output rotating member of the continuously-variable transmission portion 18.

For example, in the hybrid running mode, when the rotational speed of the sun gear S0 is increased or reduced by controlling the rotational speed of the first rotating machine MG1 relative to the rotational speed of the ring gear R0 that is restrained by the rotation of the drive wheels 28 since one of the AT gear positions is established in the step-variable transmission portion 20, the rotational speed of the carrier CA0, i.e., the engine rotational speed Ne, is increased or reduced. Therefore, in the hybrid running, the engine 14 can be operated at an efficient operating point. Thus, a continuously variable transmission can be constituted by cooperation of the step-variable transmission portion 20 having one of the AT gear position is established therein and the continuously-variable transmission portion 18 operated as a continuously variable transmission, as the whole of the transmission device 40 in which the continuously-variable transmission portion 18 and the step-variable transmission portion 20 are arranged in series.

Alternatively, since a shifting operation can be performed in the continuously-variable transmission portion 18 as in a step-variable transmission, a shifting operation can be performed as in a step-variable transmission by using the step-variable transmission portion 20 having one of the AT gear positions established therein and the continuously-variable transmission portion 18 in which a shifting operation is performed as in a step-variable transmission, as the whole of the transmission device 40. In other words, in the transmission device 40, the step-variable transmission portion 20 and the continuously-variable transmission portion 18 can be controlled so as to selectively establish a plurality of gear positions that are different in the gear ratio yt (=Ne/No) indicative of the ratio of the engine rotational speed Ne to the output rotational speed No. In the present embodiment, the gear position established in the transmission device 40 is referred to as an overall speed position (although it may be referred also to as a conceptual speed position). The gear ratio yt is an overall gear ratio of the transmission device 40 consisting of the continuously-variable transmission portion 18 and the step-variable transmission portion 20 which are disposed in series with each other. The overall gear ratio yt is equal to a product of the gear ratio γ0 of the continuously-variable transmission portion 18 and the gear ratio yat of the step-variable transmission portion 20, namely, yt = γ0 × yat.

For example, the overall speed position is assigned such that one or more types are established for each of the AT gear positions of the step-variable transmission portion 20 by combining the AT gear positions of the step-variable transmission portion 20 with one or more types of the gear ratio γ0 of the continuously-variable transmission portion 18. For example, the overall speed position is defined in advance such that first through third overall speed positions are established for the first speed AT gear position, the fourth through sixth overall speed positions are established for the second speed AT gear position, seventh through ninth overall speed positions are established for the third speed AT gear position, and the tenth overall speed position is established for the fourth speed AT gear position. In the transmission device 40, the continuously-variable transmission portion 18 is controlled to attain the engine rotational speed Ne by which a desired gear ratio yt is established for the output rotational speed No, so that different speed positions are established with a certain AT gear position being established in the step-variable transmission portion 20. Further, in the transmission device 40, the continuously-variable transmission portion 18 is controlled with switching of the AT gear position in the step-variable transmission portion 20 whereby the overall speed position is switched.

Referring back to FIG. 1, the vehicle 10 is provided with the electronic control apparatus 90 as a controller including the control apparatus which is constructed according to present invention and which is configured to control, for example, the engine 14, continuously-variable transmission portion 18 and step-variable transmission portion 20. FIG. 1 is a view showing an input/output system of the electronic control apparatus 90, and is a functional block diagram for explaining major control functions and control portions if the electronic control apparatus 90. For example, the electronic control apparatus 90 includes a so-called microcomputer incorporating a CPU, a ROM, a RAM and an input-output interface. The CPU performs control operations of the vehicle 10, by processing various input signals, according to control programs stored in the ROM, while utilizing a temporary data storage function of the RAM The electronic control apparatus 90 may be constituted by two or more control units exclusively assigned to perform different control operations such as the engine control operation and the hydraulic-pressure control operation.

The electronic control apparatus 90 receives various input signals based on values detected by respective sensors provided in the vehicle 10. Specifically, the electronic control apparatus 90 receives: an output signal of an engine speed sensor 60 indicative of an engine rotational speed Ne which is a rotational speed of the engine 14; an output signal of an output speed sensor 62 indicative of an output-shaft rotational speed No which is a rotational speed of the output shaft 22 and which corresponds to the running speed V of the vehicle 10; an output signal of a MG1 speed sensor 64 indicative of an MG1 rotational speed Ng which is a rotational speed of the first rotating machine MG1; an output signal of a MG2 speed sensor 66 indicative of an MG2 rotational speed Nm which is a rotational speed of the second rotating machine MG2 and which corresponds to an AT input rotational speed Ni; an output signal of an accelerator-opening degree sensor 68 indicative of an accelerator opening degree (accelerator operation degree) θacc representing an amount of accelerating operation made by the vehicle driver; an output signal of a throttle-opening degree sensor 70 indicative of a throttle opening degree θth; an output signal of a brake pedal sensor 71 indicative of a brake-ON signal Bon representing a state of depression of a brake pedal as a brake operating member by the vehicle driver to operate wheel brakes and also a braking operation amount Bra representing an amount of depression of the brake pedal by the vehicle driver corresponding to a depressing force applied to the brake pedal; an output signal of a steering sensor 72 indicative of a steering angle θsw and a steering direction Dsw of a steering wheel provided in the vehicle 10 and also a steering ON signal SWon representing a state in which the steering wheel is being held by the vehicle driver; an output signal of a driver condition sensor 73 indicative of a driver condition signal Drv representing a condition of the vehicle driver; an output signal of a G senor 74 indicative of a longitudinal acceleration Gx and a lateral acceleration Gy of the vehicle 10; an output signal of a yaw rate sensor 76 indicative of a yaw rate Ryaw that is an angular speed around a vertical axis of the vehicle 10; an output signal of a battery sensor 78 indicative of a battery temperature THbat, a charging/discharging electric current Ibat and a voltage Vbat of the battery 54; an output signal of a fluid temperature sensor 79 indicative of a working fluid temperature THoil that is a temperature of the working fluid OIL; an output signal of a vehicle-area information sensor 80 indicative of vehicle area information lard; an output signal of a vehicle location sensor 81 indicative of location information Ivp; an output signal of an external-network communication antenna 82 indicative of an communication signal Scom; an output signal of a navigation system 83 indicative of navigation information Inavi; output signals of drive-assist setting switches 84 indicative of drive-assist setting signals Sset representing a setting made by the vehicle driver for execution of a drive-assist control such as automatic drive control and a cruise control; and an output signal of a shift position sensor 85 indicative of an operation position POSsh of a shift lever provided in the vehicle 10.

The electronic control apparatus 90 calculates a charged state value SOC [%] that is a value representing a state of charge of the battery 54, based on, for example, the charging/discharging electric current Ibat and the voltage Vbat of the battery 54. The charged state value SOC of the battery 54 is, for example, a ratio (= Ebat/Ebatt) of an electric energy Ebat [kWh] remaining in the battery 54, to a total electric energy Ebatt [kWh] of the battery 54, namely, a ratio (= Cbat/Cbatt) of a charged capacity Cbat of the battery 54 to a total charged capacity Cbatt of the battery 54. In the following description regarding the present embodiment, the electric energy Ebat remaining in the battery 54 will be referred to as "remaining electric energy Ebatr" of the battery 54.

The electronic control apparatus 90 further calculates, based on, for example, the battery temperature THbat and the charged state value SOC of the battery 54, a maximum charging amount Win and a maximum discharging amount Wout that define a range of a battery power Pbat as a power of the battery 54 that can be used. The maximum charging amount Win of the battery 54 is an inputtable electric power that defines a limit of an input electric power Wbin inputted to the battery 54. The maximum discharging amount Wout of the battery 54 is an outputtable electric power that defines a limit of an output electric power Wbout outputted from the battery 54. The calculated maximum charging and discharging amounts Win and Wout decrease with a decrease of the battery temperature Thbat, for example, when the battery temperature THbat is lower than a normal level, and decrease with an increase of the battery temperature Thbat, for example, when the battery temperature THbat is higher than the normal level. Further, the maximum charging amount Win decreases with an increase of the charged state value SOC, for example, when the charged state value SOC is relatively large. The maximum discharging amount Wout decreases with a decrease of the charged state value SOC, for example, when the charged state value SOC is relatively small.

The amount of accelerating operation made by the vehicle driver is, for example, an amount of operation of an acceleration operating member such as an accelerator pedal, and corresponds to a required output amount that is an amount of output of the vehicle 10 required by the vehicle driver. As the required output amount required by the vehicle driver, the throttle opening degree θth can be used in addition to or in place of the accelerator opening degree θacc, for example.

The driver condition sensor 73 includes a camera configured to photograph, for example, a facial expression and pupils of eyes of the vehicle driver and/or a biometric information sensor configured to detect biometric information of the vehicle driver, so as to detect or obtain directions of his or her eyes and face, movements of his or her eye balls and face and condition of his or her heartbeat, for example.

The vehicle-area information sensor 80 includes a lidar (Light Detection and Ranging), a radar (Radio Detection and Ranging) and/or an onboard camera, for example, so as to directly obtain information relating to a road on which the vehicle 10 is running and information relating to an object or objects present around the vehicle 10. The lidar is constituted by, for example, a plurality of lidar units configured to detect objects present in the respective front, lateral and rear sides of the vehicle 10, or a single lidar unit configured to detect objects present all around the vehicle 10. The lidar is configured to output, as the vehicle area information lard, object information that is information relating to the detected object or objects. The radar is constituted by, for example, a plurality of radar units configured to detect objects present in the respective front, front vicinity and rear vicinity of the vehicle 10, and to output, as the vehicle area information lard, object information that is information relating to the detected object or objects. The objected information outputted as the vehicle area information lard by the lidar and the radar includes a distance and a direction of each of the detected objects from the vehicle 10. The onboard camera is, for example, a monocular camera or a stereo camera configured to capture images of front and rear sides of the vehicle 10, and to output, as the vehicle area information lard, captured image information that is information relating to the captured images. The captured image information outputted as the vehicle area information lard by the onboard camera includes information relating to lanes of a running road, signs and parking spaces present on the running road, and other vehicles, pedestrians and obstacles present on the running road.

The vehicle location sensor 81 includes a GPS antenna. The location information Ivp outputted by the vehicle location sensor 81 includes own-vehicle location information indicating a location of the vehicle 10 on the earth's surface or a map based on, for example, GPS signals (Orbit signals) transmitted by GPS (Global Positioning System) satellites.

The navigation system 83 is a known navigation system including a display and a speaker, and is configured to specify a location of the vehicle 10 on pre-stored map data, based on the location information Ivp, and to indicate the location of the vehicle 10 on the map displayed on the display. The navigation system 83 receives a destination point inputted thereto, calculates a running route from a departure point to the destination point, and informs, as instructions, the vehicle driver of the running route, for example, through the display and the speaker. The navigation information Inavi includes map information such as road information and facility information that are based on the map data pre-stored in the navigation system 83. The road information includes information relating to types of roads (such as urban roads, suburban roads, mountain roads and highway load), branching and merging of roads, road gradients, and running speed limits. The facility information includes information of types, locations, names of sites such as supermarkets, shops, restaurants, parking lots, parks, places for repairing the vehicle 10, a home of vehicle's owner and service areas located on the highway load. The service areas are sites which are located on, for example, the highway load, and in which there are facilities for parking, eating, and refueling.

The drive-assist setting switches 84 include an automatic-drive selecting switch for executing the automatic drive control, a cruise switch for executing the cruise control, a switch for setting the vehicle running speed in execution of the cruise control, a switch for setting a distance from another vehicle preceding the vehicle 10 in execution of the cruise control, and a switch for executing a lane keeping control for keeping the vehicle 10 to run within a selected road lane.

The communication signal Scom includes road traffic information that is transmitted and received to and from a center that is an external device such as a road traffic information communication system, and/or inter-vehicle communication information that is directly transmitted and received to and from the at least one other vehicle 200 present in the vicinity of the vehicle 10 without via the center. The road traffic information includes information relating to traffic jams, accidents, road constructions, required travel times, and parking lots on roads. The inter-vehicle communication information includes vehicle information, running information, traffic environment information. The vehicle information includes information indicative of a vehicle type of the at least one other vehicle 200 such as passenger vehicle, truck, and two-wheel vehicle. The running information includes information relating to the at least one other vehicle 200 such as information indicative of the vehicle speed V, location information, brake-pedal operation information, turn-signal-lamp blinking information, and hazard-lamp blinking information. The traffic environment information includes information relating to traffic jams and road constructions.

The electronic control apparatus 90 generates various output signals to the various devices provided in the vehicle 10, such as: an engine control command signal Se that is to be supplied to the engine control device 50 for controlling the engine 14, rotating-machine control command signals Smg that are to be supplied to the inverter 52 for controlling the first and second rotating machines MG1, MG2; hydraulic control command signal Sat that is to be supplied to the hydraulic control unit 56 for controlling the operation states of the engagement devices CB; an EOP control command signal Seop that is to be supplied to the motor 59 for controlling operation of the EOP 58; the communication signal Scom that is to be supplied to the external-network communication antenna 82; a brake-control command signal Sbra that is supplied to a wheel brake device 86, for controlling a braking torque generated by the wheel brake device 86; a steering-control command signal Sste that is to be supplied to a steering device 88, for controlling steering of wheels (especially, front wheels) of the vehicle 10; and an information-notification-control command signal Sinf that is to be supplied to an information notification device 89, for warning and notifying information to the vehicle driver.

The wheel brake device 86 is a brake device including wheel brakes each of which is configured to apply a braking torque to a corresponding one of the wheels that include the drive wheels 28 and driven wheels (not shown). The wheel brake device 86 supplies a brake hydraulic pressure to a wheel cylinder provided in each of the wheel brakes in response to a depressing operation of the brake pedal by the vehicle driver, for example. In the wheel brake device 86, normally, a brake master cylinder is configured to generate a master-cylinder hydraulic pressure whose magnitude corresponds to the braking operation amount Bra, and the generated master-cylinder hydraulic pressure is supplied as the brake hydraulic pressure to the wheel cylinder. On the other hand, in the wheel brake device 86, for example, during execution of an ABS control, an anti-skid control, a vehicle-running-speed control or an automatic drive control, the brake hydraulic pressure required for execution of such a control is supplied to the wheel cylinder for enabling the wheel cylinder to generate the required braking torque.

The steering device 88 is configured to apply an assist torque to a steering system of the vehicle 10 in accordance with the vehicle running speed V, steering angle θsw, steering direction Dsw and yaw rate Ryaw, for example. For example, during execution of the automatic driving control, the steering device 88 applies a torque for controlling the steering of the front wheels, to the steering system of the vehicle 10.

The information notification device 89 is configured to give a warning or notification to the vehicle driver in even of a failure in some components involved in the running of the vehicle 10 or deterioration in the functions of the components, for example. The information notification device 89 is constituted by, for example, a display device such as a monitor, a display and an alarm lamp, and/or a sound output device such as a speaker and a buzzer. The display device is configured to visually give a warning or notification to the vehicle driver. The sound output device is configured to aurally give a warning or notification to the vehicle driver.

Referring back to FIG. 1, the vehicle 10 further includes a transceiver 100, a first gateway ECU 110, a second gateway ECU 120 and a connector 130.

The transceiver 100 is a device configured to communicate with a server 200 as an external device which is present apart from the vehicle 10 and is provided outside the vehicle 10. Each of the first and second gateway ECUs 110, 120 has substantially the same hardware construction as the electronic control apparatus 90, and is constituted by, for example, a control device provided to rewrite the vehicle program 91 stored in the rewritable ROM included in the electronic control apparatus 90. The connector 130 is provided to connect an external rewriting device 210 as an external device which is present apart from the vehicle 10 and is provided outside the vehicle 10, to, for example, the second gateway ECU 120. A shape and an electrical signal of the connector 130 are defined by a known standard. The connector 130 can be used also as a connector that connects a failure diagnosis device. As the standard of the connector 130, there are OBD (On-Board Diagnostics), WWH-OBD (World Wide Harmonized-OBD), KWP (Keyword Protocol), UDS (Unified Diagnostic Services), for example. The connector 130 is called OBD connector, DLC connector and failure diagnosis connector, for example.

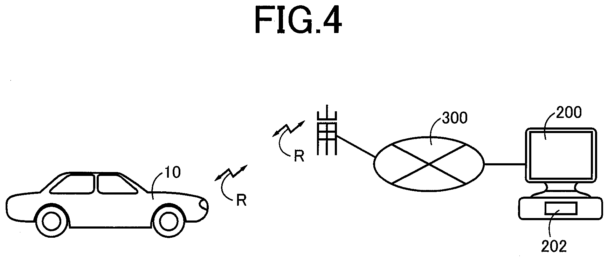

As shown in FIG. 4, the server 200 is a system connected to a network 300 provided outside the vehicle 10. The server 200 stores therein a new program 202 which has been uploaded and to which the vehicle program 91 is to be rewritten or updated. The server 200 transmits the new program 202 to the vehicle 10 as needed, and serves as software distribution center configured to distribute the new program 202, for example. The external rewriting device 210 is connected directly to an in-vehicle communication network, and is capable of receiving a CAN (Controller Area Network) frame transmitted through the in-vehicle communication network and transmitting the CAN frame to the n-vehicle communication network, as the electronic control apparatus 90, for example.

As shown in FIG. 4, the transceiver 100 is connected to the network 300 through a radio communication (wireless communication) R. The first gateway ECU 110 is connected to the transceiver 100, and is configured to rewrite or update the vehicle program 91, to the new program 202 received by the transceiver 100 from the server 200 via the radio communication R. The second gateway ECU 120 is connected to the connector 130, and is configured to rewrite or update the vehicle program 91, by using the external rewriting device 210 that is to be connected to the second gateway ECU 120 through the connector 130. Thus, the electronic control apparatus 90 and the first and second gateway ECUs 110, 120 cooperate to constitute a control apparatus for the vehicle 10, wherein the control apparatus is configured at least to execute an update of the vehicle program 91. It is noted that the control apparatus may be configured to communicate with the server 200 through the external-network communication antenna 82 via the radio communication R. Further, although the vehicle 10 and the external rewriting device 210 are connectable from the connector 130 via a wire communication in the present embodiment, the vehicle 10 and the external rewriting device 210 may be connectable via a radio communication. Further, the vehicle program 91, which is to be rewritten or updated, may be interpreted to include vehicle softwares and vehicle data that are to be used for execution of control operations in the vehicle 10. Still further, it can be considered that the electronic control device 90 and the first and second gateway ECUs 110, 120 of the vehicle 10 (that cooperate to constitute the above-described control apparatus) cooperate with the server 200 as the external device to constitute a control system for updating the vehicle program 91.

The first gateway ECU 110 includes a program updating means or portion in the form of a program updating portion 112, for performing a control for executing the update of the vehicle program 91. The program updating portion 112 is configured to execute the update of the vehicle program 91, namely, to rewrite or update the vehicle program 91 to the new program 202 that has been received from the server 200 via the radio communication R.

For performing various control operations in the vehicle 10, the electronic control apparatus 90 includes an AT shift control means or portion in the form of an AT shift control portion 92, a hybrid control means or portion in the form of a hybrid control portion 93 and a driving control means or portion in the form of a driving control portion 94.

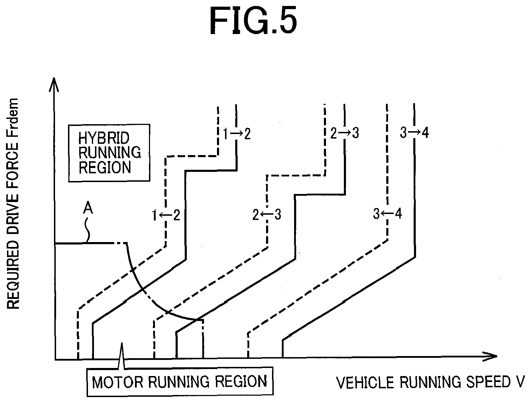

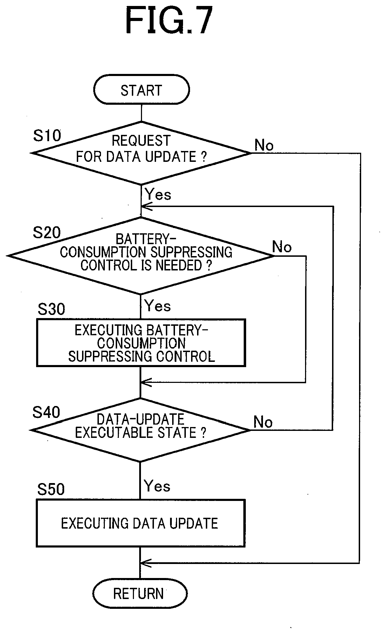

The AT shift control portion 92 is configured to determine a shifting action of the step-variable transmission portion 20, by using, for example, an AT gear position shift map as shown in Fig. 7, which is a relationship obtained by experimentation or determined by an appropriate design theory, and outputs the hydraulic control command signal Sat supplied to the hydraulic control unit 56, so as to execute the shift control operation in the step-variable transmission portion 20 as needed. The AT gear position shifting map is a predetermined relationship between two variables in the form of the vehicle running speed V and the required drive force Frdem, for example, which relationship is used to determine a shifting action of the step-variable transmission portion 20 and is represented by shifting lines in two-dimensional coordinates in which the running speed V and the required drive force Frdem are taken along respective two axes. It is noted that one of the two variables may be the output rotational speed No in place of the vehicle running speed V and that the other of the two variables may be the required drive torque Trdem, accelerator opening degree θacc or throttle valve opening degree θth in place of the required drive force Frdem. The shifting lines in the AT gear position shifting map consist of shift-up lines (indicated by solid lines in FIG. 5) for determining a shift-up action of the step-variable transmission portion 20, and shift-down lines (indicated by broken lines in FIG. 5) for determining a shift-down action of the step-variable transmission portion 20.

The hybrid control portion 93 has a function serving as an engine control means or portion for controlling the operation of the engine 14 and a function serving as a rotating machine control means or portion for controlling the operations of the first rotating machine MG1 and the second rotating machine MG2 via the inverter 52, and executes a hybrid drive control, for example, using the engine 14, the first rotating machine MG1 and the second rotating machine MG2 through these control functions. The hybrid control portion 93 calculates a drive request amount in the form of the required drive force Frdem that is to be applied to the drive wheels 28, by applying the accelerator opening degree θacc and the vehicle running speed V to, for example, a drive request amount map that is a predetermined relationship. The required drive torque Trdem [Nm] applied to the drive wheels 28, a required drive power Prdem [W] applied to the drive wheels 28, a required AT output torque applied to the output shaft 22, etc. can be used as the drive request amount, in addition to the required drive force Frdem [N].

The hybrid control portion 93 outputs the engine control command signal Se for controlling the engine 14 and the rotating-machine control command signals Smg for controlling the first and second rotating machines MG1, MG2, by taking account of a maximum charging amount Win of electric power that can be charged to the battery 54, and a maximum discharging amount Wout of electric power that can be discharged from the battery 54, such that the required drive power Prdem based on the required drive torque Trdem and the vehicle running speed V is obtained. The engine control command signal Se is, for example, a command value of an engine power Pe that is the power of the engine 14 outputting the engine torque Te at the current engine rotation speed Ne. The rotating-machine control command signal Smg is, for example, a command value of the generated electric power Wg of the first rotating machine MG1 outputting the MG1 torque Tg as the reaction torque of the engine torque Te at the MG1 rotation speed Ng which is the MG1 rotation speed Ng at the time of command signal Smg output, and is a command value of a consumed electric power Wm of the second rotating machine MG2 outputting the MG2 torque Tm at the MG2 rotation speed Nm which is the MG2 rotation speed Nm at the time of command signal Smg output.

For example, when the transmission device 40 is operated as a continuously variable transmission as a whole by operating the continuously variable transmission portion 18 as a continuously variable transmission, the hybrid control portion 93 controls the engine 14 and controls the generated electric power Wg of the first rotating machine MG1 so as to attain the engine rotational speed Ne and the engine torque Te at which the engine power Pe achieving the required drive power Prdem is acquired in consideration of an engine optimum fuel consumption point etc., and thereby provides the continuously variable shift control of the continuously variable transmission portion 18 to change the gear ratio γ0 of the continuously variable transmission portion 18. As a result of this control, the gear ratio yt of the transmission device 40 is controlled in the case of operating the transmission device 40 as a continuously variable transmission.

For example, when the transmission device 40 is operated as a step-variable transmission as a whole by operating the continuously variable transmission portion 18 as in a step-variable transmission, the hybrid control portion 93 uses a predetermined relationship, for example, an overall speed position shift map, to determine a shifting action of the transmission device 40 and provides the shift control of the continuously variable transmission portion 18 so as to selectively establish the plurality of overall speed positions in coordination with the shift control of the AT gear position of the step-variable transmission portion 20 by the AT shift control portion 92. The plurality of overall speed positions can be established by controlling the engine rotational speed Ne by the first rotating machine MG1 in accordance with the vehicle speed V so as to maintain the respective gear ratios yt. The gear ratio yt of each of the overall speed positions may not necessarily be a constant value over the entire region of the vehicle speed V and may be changed in a predetermined region or may be limited by an upper limit, a lower limit, etc. of the rotational speed of each rotary member or element. As described above, the hybrid control portion 93 can provide the shift control in which the engine rotational speed Ne is changed as in a step-variable shift. An overall step-variable shift control of causing the transmission device 40 to perform a shift as in a step-variable transmission as a whole may be provided only in priority to the continuously variable shift control of operating the transmission device 40 as a continuously variable transmission as a whole in the case that, for example, the vehicle driver selects a running mode placing emphasis on running performance such as a sports running mode etc. or the required drive torque Trdem is relatively large; however, the overall step-variable shift control may basically be provided except when a predetermined restriction is placed on provision.

The hybrid control portion 93 selectively establishes the motor running mode or the hybrid running mode as the running mode depending on a driving state, so as to cause the vehicle 10 to run in a selected one of the running modes. For example, the hybrid control portion 93 establishes the motor running mode when the required drive power Prdem is in a motor running region smaller than a predetermined threshold value, and establishes the hybrid running mode when the required drive power Prdem is in a hybrid running region equal to or greater than the predetermined threshold value. In FIG. 7, one-dot chain line A is a boundary line for switching the drive force source for driving the vehicle 10 between at least the engine 14 and only the second rotating machine MG2. That is, the one-dot chain line A of FIG. 5 is a boundary line between the hybrid running region and the motor running region for switching between the hybrid running and the motor running. A predetermined relationship having the boundary line as indicated by the one-dot chain line A of FIG. 5 is an example of a drive-force source switching map defined by the two-dimensional coordinates of variables in the form of the vehicle running speed V and the required drive force Frdem. It is noted that, in FIG. 7, the drive-force source switching map is shown together with AT gear position shift map, for convenience of the description.

The hybrid control portion 93 establishes the motor running mode when the required drive power Prdem is in the motor running region, and establishes the hybrid running mode when the required drive power Prdem is in the hybrid running region. However, even when the required drive power Prdem is in the motor running region, the hybrid control portion 93 establishes the hybrid running mode if the charged state value SOC of the battery 54 is less than a predetermined engine-start threshold value. The motor running mode is a driving state in which the vehicle 10 is caused to run by the driving torque generated by the second rotating machine MG2, with the engine 14 being stopped. The hybrid running mode is a driving state in which the vehicle 10 is caused to run with the engine 14 being operated. The engine-start threshold value is a predetermined threshold value for determining that the state-of-charge value SOC reaches a level at which the engine 14 must forcibly be started for charging the battery 54.

When establishing the hybrid running mode upon stop of operation of the engine 14, the hybrid control portion 93 executes a control for staring the engine 14. For staring the engine 14, the hybrid control portion 93 increases the engine rotational speed Ne by the first rotating machine MG1, and starts the engine 14, by igniting when the engine rotational speed Ne becomes at least a certain speed value that is an ignitable speed value. That is, the hybrid control portion 93 starts the engine 14 by cranking the engine 14 by the first rotating machine MG1.

The driving control portion 94 is capable of executing, as a drive control for driving the vehicle 10, a selected one of a manual drive control for driving the vehicle 10 in accordance with driving operations made by the vehicle driver and a drive assist control for driving the vehicle 10 without depending on the driving operations made by the vehicle driver. The manual drive control is for causing the vehicle 10 to run by manual operations, i.e., the driving operation manually made by the vehicle driver. The manual drive control is a driving method for casing the vehicle 10 to run by the vehicle driver's driving operations such as an accelerating operation, a barking operation and a steering operation. The drive assist control is for causing the vehicle 10 to run, for example, with a drive assist by which the driving operations are automatically assisted. The drive assist is a driving method for causing the vehicle 10 to run, for example, by automatically accelerating, decelerating and braking the vehicle 10, by controls executed by the electronic control apparatus 90, based on the signals and information supplied from the various sensors, without depending on the driving operations made by the vehicle driver, namely, without depending on intentions of the vehicle driver. The drive assist control is, for example, the automatic drive control in which the vehicle 10 is accelerated, decelerated, braked and steered, depending on a target driving state that is automatically determined based on, for example, the map information and the destination point inputted by the vehicle driver. It is noted that the drive assist control may be broadly interpreted to encompass the cruise control in which some of the driving operations such as the steering operation are executed by the vehicle driver while the other driving operations such as the accelerating, decelerating and braking operations are automatically executed.

When a drive-assist mode is not selected with the automatic-drive selecting switch and the cruise switch of the drive-assist setting switches 84 being placed in OFF, the driving control portion 94 establishes a manual drive mode so as to execute the manual drive control. The driving control portion 94 executes the manual drive control by outputting commands for controlling the step-variable transmission portion 20, engine 14 and first and second rotating machines MG1, MG2, wherein the commands are supplied to the AT shift control portion 92 and the hybrid control portion 93.

When an automatic drive mode is selected with the automatic-drive selecting switch of the drive-assist setting switches 84 being placed in ON by the vehicle driver, the driving control portion 94 establishes the automatic drive mode so as to execute the automatic drive control. Specifically, the driving control portion 94 automatically sets a target driving state that is dependent on, for example, the destination point inputted by the vehicle driver, the own-vehicle location information based on the location information Ivp, the map information based on the navigation information Inavi and various information relating to the running road and based on the vehicle area information lard. The driving control portion 94 executes the automatic drive control for automatically accelerating, decelerating and steering the vehicle 10, based on the set target driving state. To this end, the driving control portion 94 outputs the commands for controlling the step-variable transmission portion 20, engine 14 and rotating machines MG1, MG2, and the outputted commands are supplied to the AT shift control portion 92 and the hybrid control portion 93. Further, in this instance, the driving control portion 94 outputs the brake-control command signal Sbra for obtaining the required braking torque, and the steering-control command signal Sste for controlling steering of the front wheels, wherein the outputted brake-control command signal Sbra and steering-control command signal Sste are supplied to the wheel brake device 86 and the steering device 88, respectively.

By the way, when the vehicle program 91 is updated to the new program 202 by the program updating portion 112, an electric energy Econ corresponding to an amount of update data in the new program 202 is consumed. The battery 54 supplies an update-consumed electric energy Econud that is the electric energy Econ to be consumed when the vehicle program 91 is being updated to the new program 202. When the hybrid running mode is established, the charged state value SOC of the battery 54 is controlled by the hybrid control portion 93, so as to be held within a predetermined range whose center is a target value of the charged state value SOC. Thus, when the vehicle 10 is running or when the vehicle 10 is placed in a drive-torque generatable state in which the drive torque is generatable by the vehicle 10, the remaining electric energy Ebatr of the battery 54 is unlikely to be insufficient even if the vehicle program 91 is updated. However, when the vehicle 10 is stopped and is placed in a state in which the drive torque is not generatable by the vehicle 10, if the vehicle program 91 is updated whereby the charged state value SOC is only reduced, there is a risk that the remaining electric energy Ebatr of the battery 54 could be insufficient during the update of the vehicle program 91. The target value of the charged state value SOC of the battery 54 is set within the predetermined range, which is predetermined, for example, such that the battery 54 is neither overcharged nor overdischarged. In the following description regarding the present embodiment, the target value of the charged state value SOC of the battery 54 will be simply referred to as "SOC target value". The above-described drive-torque generatable state in which the drive torque is generatable by the vehicle 10, is a state in which the drive torque is generated by the vehicle 10 with an acceleration ON, namely, with the acceleration operating member being operated. The drive-torque generatable state is, for example, a state of ignition ON. The above-described state in which the drive torque is not generatable by the vehicle 10 is, for example, a state of ignition OFF.

For performing a control function of increasing opportunities for the update of the vehicle program 91 when there is a request (corresponding to "program update request" recited in the appended claims) requesting the update of the vehicle program 91 to the new program 202 that has been transmitted from the server 200 via the radio communication R, the electronic control apparatus 90 further includes a remaining-electric-energy reduction suppressing means or portion in the form of a remaining-electric-energy reduction suppressing portion 96 and a remaining-electric-energy determining means or portion in the form of a remaining-electric-energy determining portion 98.

The program updating portion 112 determines whether there is the request requesting a data update, namely, requesting the vehicle program 91 to be updated to the new program 202 received from the server 200 via the radio communication R. The program updating portion 112 determines whether there is the program update request requesting the data update, for example, depending on whether the vehicle 10 is a state in which the new program 202 transmitted from the sever 200 has been received.

When it is determined by the program updating portion 112 that there is the request requesting the data update, the remaining-electric-energy reduction suppressing portion 96 executes a battery-consumption suppressing control that is a control for suppressing the reduction of the remaining electric energy Ebatr remaining in the battery 54. The battery-consumption suppressing control is to be executed at least for suppressing the reduction of the remaining electric energy Ebatr of the battery 54, and includes also a control to be executed for maintaining or increasing the remaining electric energy Ebatr.

Specifically, when it is determined by the program updating portion 112 that there is the request requesting the data update, the remaining-electric-energy determining portion 98 determines whether the battery-consumption suppressing control needs to be executed or not, namely, whether the charged capacity Cbat of the battery 54 needs to be increased for updating the vehicle program 91 or not. When it determined by the remaining-electric-energy determining portion 98 that the battery-consumption suppressing control needs to be executed, the remaining-electric-energy reduction suppressing portion 96 executes the battery-consumption suppressing control.

The remaining-electric-energy determining portion 98 determines whether the remaining electric energy Ebatr of the battery 54 is not smaller than an update-required remaining electric energy Ebatrudn that assures the update-consumed electric energy Econud, namely, includes the update-consumed electric energy Econud. When determining that the remaining electric energy Ebatr of the battery 54 is not smaller than the update-required remaining electric energy Ebatrudn, the remaining-electric-energy determining portion 98 determines that the battery-consumption suppressing control does not need to be executed. When determining that the remaining electric energy Ebatr of the battery 54 is smaller than the update-required remaining electric energy Ebatrudn, the remaining-electric-energy determining portion 98 determines that the battery-consumption suppressing control needs to be executed. Thus, the remaining-electric-energy determining portion 98 determines whether the battery-consumption suppressing control needs to be executed or not, depending on whether the remaining electric energy Ebatr of the battery 54 is smaller than the update-required remaining electric energy Ebatrudn or not. The update-required remaining electric energy Ebatrudn is, for example, the remaining electric energy Ebatr of the battery 54, which is required when the vehicle program 91 is to be updated.

The remaining electric energy Ebatr of the battery 54 is changed depending on a running route of the vehicle 10 and operations made by a driver of the vehicle 10. The remaining-electric-energy determining portion 98 calculates an estimated value of the remaining electric energy Ebatr of the battery 54 that is changed depending on the running route of the vehicle 10 and the operations made by the driver of the vehicle 10. The estimated value of the remaining electric energy Ebatr of the battery 54, which is changed depending on the running route of the vehicle 10 and the operations made by the driver of the vehicle 10, is the remaining electric energy Ebatr that is changeable in a state in which the battery-consumption suppressing control is not executed. Specifically, the remaining-electric-energy determining portion 98 calculates, based on the running route of the vehicle 10 and information related to the operations made by the driver of the vehicle 10, a remaining-electric-energy update-start estimated value Ebatrude that is the estimated value of the remaining electric energy Ebatr of the battery 54 at a point of time of start of the update of the vehicle program 91. The remaining-electric-energy determining portion 98 calculates the remaining-electric-energy update-start estimated value Ebatrude as the remaining electric energy Ebatr of the battery 54, which is to be compared with the update-required remaining electric energy Ebatrudn. The above-described running route of the vehicle 10 is, for example, a running route to a destination point, which is based on the destination point inputted to the navigation system 83. The above-described information related to the operations made by the driver is, for example, information which is stored in the electronic control apparatus 90 and which indicates a history of the operations made by the driver. The operations made by the driver include, for example, accelerating/decelerating operations such as operations made on the acceleration operating member and the brake operating member. The remaining-electric-energy determining portion 98 calculates, based on the running route of the vehicle 10 and the information related to the operations made by the driver, the electric energy Eba of the battery 54 that is increased and reduced until the vehicle 10 reaches the destination point, and calculates the remaining-electric-energy update-start estimated value Ebatrude.

The remaining-electric-energy determining portion 98 calculates, based on the amount of update data in the new program 202 that has been received via the radio communication R, an update-consumed electric-energy estimated value Econude that is an estimated value of the update-consumed electric energy Econud. The larger the amount of update data in the new program 202, the larger the update-consumed electric-energy estimated value Econude is. The remaining-electric-energy determining portion 98 calculates, as the update-required remaining electric energy Ebatrudn, a value obtained by adding the update-consumed electric-energy estimated value Econude to a normally-required remaining electric energy Ebatrnon. The normally-required remaining electric energy Ebatrnon is the remaining electric energy Ebatr required in a normal case in which it is determined by the program updating portion 112 that there is not the request requesting the data update. The above-described normal case is, for example, a case in which the update of the vehicle program 91 is not executed.

The remaining-electric-energy reduction suppressing portion 96 changes a target remaining electric energy Ebatrt that is a target value of the remaining electric energy Ebatr remaining in the battery 54, from the normally-required remaining electric energy Ebatrnon to the update-required remaining electric energy Ebatrudn, and then controls the remaining electric energy Ebatr such that an actual value of the remaining electric energy Ebatr is not smaller than the target remaining electric energy Ebatrt that is set to the update-required remaining electric energy Ebatrudn. The remaining-electric-energy reduction suppressing portion 96 changes the target remaining electric energy Ebatrt from the normally-required remaining electric energy Ebatrnon to the update-required remaining electric energy Ebatrudn, for example, at a point of time at which it is determined by the program updating portion 112 that there is the request requesting the data update, more specifically, at which it is determined by the remaining-electric-energy determining portion 98 that the battery-consumption suppressing control needs to be executed. The target remaining electric energy Ebatrt of the battery 54 corresponds to the SOC target value (= Ebatrt/Ebatt) of the battery 54.

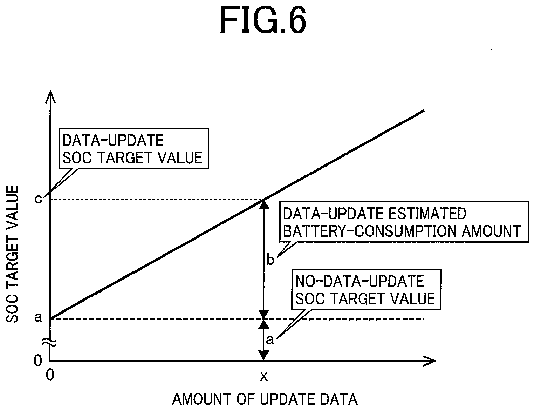

FIG. 6 is a view for explaining, by way of example, a data-update SOC target value c that is the SOC target value of the battery 54 when the update of the vehicle program 91 is to be executed. A no-data-update SOC target value a, which is also indicated in FIG. 6, is the SOC target value of the battery 54 when the update of the vehicle program 91 is not to be executed, namely, when the target remaining electric energy Ebatrt is normally-required remaining electric energy Ebatrnon. A data-update estimated battery-consumption amount b is an estimated amount of reduction the charged state value SOC of the battery 54, which is caused by the update of the vehicle program 91, wherein the estimated amount of reduction the charged state value SOC corresponds to the update-consumed electric-energy estimated value Econude that is calculated depending on the amount x of update data in the new program 202 The data-update SOC target value c, which is the SOC target value of the battery 54 when the update of the vehicle program 91 is to be executed, is a value obtained by adding the data-update estimated battery-consumption amount b to the no-data-update SOC target value a. The remaining-electric-energy reduction suppressing portion 96 executes the battery-consumption suppressing control, by changing the SOC target value from the no-data-update SOC target value a to the data-update SOC target value c.

When the vehicle 10 runs in the motor running mode, the charged state value SOC of the battery 54 could be temporarily increased by a regenerative control of the second rotating machine MG2. However, in the motor running as a whole, the charged state value SOC is reduced. The remaining-electric-energy reduction suppressing portion 96 may execute the battery-consumption suppressing control, by inhibiting the motor running or limiting a region of the motor running.

The inhibition of the motor running is to forcibly place the running mode into the hybrid running mode in which the battery 54 can be charged with the generated electric power Wg of the first rotating machine MG1. The remaining-electric-energy reduction suppressing portion 96 may execute the battery-consumption suppressing control, by forcibly charging the battery 54 with the generated electric power Wg of the first rotating machine MG1. That is, the remaining-electric-energy reduction suppressing portion 96 executes the battery-consumption suppressing control, by increasing the generated electric power Wg of the first rotating machine MG1 with which the battery 54 can be charged, such that the generated electric power Wg of the first rotating machine MG1 is made larger than in the case in which it is determined by the program updating portion 112 that there is not the request for the data update, namely, in the case in which it is determined by the remaining-electric-energy determining portion 98 that the battery-consumption suppressing control does not need to be executed. From another point of view, the operation of the engine 14 is temporarily stopped when the motor running mode is established. That is, inhibiting the motor running is inhibiting an idling stop control by which the operation of the engine 14 is temporarily stopped.

The limitation of the region of the motor running is, for example, to make the above-described engine-start threshold value larger in the case in which the vehicle program 91 is to be updated than in the above-described normal case. The engine-start threshold value is equivalent to the SOC target value of the battery 54. Alternatively, the limitation of the region of the motor running is, for example, to reduce the threshold value (see one-dot chain line in FIG. 5) of the required drive power Prdem that defines the motor running region in the case in which the vehicle program 91 is to be updated such that the threshold value of the required drive power Prdem is made smaller than in the above-described normal case.

The program updating portion 112 determines whether the vehicle 10 is placed in a data-update executable state, i.e., in a state in which the update of the vehicle program 91 is executable, depending on whether the vehicle 10 is stopped and is placed in the state of ignition OFF. When determining that the vehicle 10 is paced in the data-update executable state, the program updating portion 112 executes the update of the vehicle program 91. The remaining-electric-energy reduction suppressing portion 96 executes the battery-consumption suppressing control after it has been determined by the program updating portion 112 that there is the request of the data update (more specifically, after it has been determined by the remaining-electric-energy determining portion 98 that the battery-consumption suppressing control needs to be executed) and before the update of the vehicle program 91 by the program updating portion 112 is started. The update of the vehicle program 91 is started, for example, at a point of time at which the vehicle 10 is stopped and placed into the state of ignition OFF.

FIG. 7 is a flow chart showing a main part of a control routine executed by the electronic control apparatus 90 and the first gateway ECU 110, namely, a control routine that is executed for increasing opportunities for the update of the vehicle program 91 when there is the request requesting the update of the vehicle program 91. This control routine is executed, for example, in a repeated manner.

The control routine shown FIG. 7 is initiated with step S10 corresponding to function of the program updating portion 112, which is implemented to determine whether there is the request for the data update . When a negative determination is made at step S10, one cycle of execution of the control routine is completed. When an affirmative determination is made at step S10, step S20 corresponding to function of the remaining-electric-energy determining portion 98 is implemented to determine whether the battery-consumption suppressing control needs to be executed, namely, whether the charged capacity Cbat of the battery 54 for updating the vehicle program 91 requires to be assured. When an affirmative determination is made at step S20, step S30 corresponding to function of the remaining-electric-energy reduction suppressing portion 96 is implemented to execute the battery-consumption suppressing control so as to assure the charged capacity Cbat of the battery 54 that is required to update the vehicle program 91. When a negative determination is made at step S20, or after implementation of step S30, step S40 corresponding to function of the program updating portion 112 is implemented to determine whether the vehicle 10 is in the data-update executable state, depending on whether the vehicle 10 is stopped and placed in the state of ignition OFF. When a negative determination is made at step S40, the control flow goes back to step S20. That is, until the update of the vehicle program 91 is started, steps S20 through S40 are repeatedly implemented. Owing to this control arrangement, it is possible to assure the charged capacity Cbat of the battery 54 in a manner depending on change of the running route of the vehicle 10 and changes of the operations made by the driver of the vehicle 10. When an affirmative determination is made at step S40, step S50 corresponding of function of the program updating portion 112 is implemented to execute the update of the vehicle program 91.

As described above, in the present embodiment, when there is the program update request requesting the vehicle program 91 to be updated to the new program 202 received via the radio communication R from the server 200, the battery-consumption suppressing control is executed, thereby making it possible to avoid shortage of the remaining electric energy Ebatr remaining in the battery 54 during execution of the update of the vehicle program 91. That is, it is possible to avoid the execution of the update of the vehicle program 91 from being suspended due to the shortage of the remaining electric energy Ebatr remaining in the battery 54. Consequently, it is possible to increase opportunities for the update of the vehicle program 91 when there is the program update request requesting the update of the vehicle program 91 to the new program 202.

In the present embodiment, when it is determined that there is the program update request requesting the vehicle program 91 to be updated and that the remaining electric energy Ebatr remaining in the battery 54 is smaller than the update-required remaining electric energy Ebatrudn, the battery-consumption suppressing control is executed for suppressing reduction of the remaining electric energy Ebatr remaining in the battery 54. Therefore, it is possible to appropriately avoid shortage of the remaining electric energy Ebatr remaining in the battery 54 during execution of the update of the vehicle program 91.

In the present embodiment, the estimated value of the remaining electric energy Ebatr, which is changed depending on the running route of the vehicle 10 and operations made by the driver of the vehicle 10, is calculated, and the remaining-electric-energy update-start estimated value Ebatrude (that is the estimated value of the remaining electric energy Ebatr at the point of time of the start of the update of the vehicle program 91) is calculated to be used as the remaining electric energy Ebatr that is to be compared with the update-required remaining electric energy Ebatrudn. Thus, when it is determined that the remaining-electric-energy update-start estimated value Ebatrude is smaller than the update-required remaining electric energy Ebatrudn, the battery-consumption suppressing control is executed so that it is possible to more appropriately avoid shortage of the remaining electric energy Ebatr remaining in the battery 54 during execution of the update of the vehicle program 91.

In the present embodiment, the update-consumed electric-energy estimated value Econude is calculated, and the update-required remaining electric energy Ebatrudn is calculated by adding the update-consumed electric-energy estimated value Econude to the normally-required remaining electric energy Ebatrnon. Owing to this control arrangement, it is possible to more appropriately avoid shortage of the remaining electric energy Ebatr remaining in the battery 54 during execution of the update of the vehicle program 91.

In the present embodiment, the battery-consumption suppressing control is executed, by controlling the remaining electric energy Ebatr of the battery 54 such that an actual value of the remaining electric energy Ebatr is not smaller than the target remaining electric energy Ebatrt that has been changed from the normally-required remaining electric energy Ebatrnon to the update-required remaining electric energy Ebatrudn. Thus, it is possible to appropriately suppress reduction of the remaining electric energy Ebatr of the battery 54.

In the present embodiment, the battery-consumption suppressing control is executed, by inhibiting the motor running of the vehicle 10 or by limiting the region of the motor running. Thus, it is possible to appropriately suppress reduction of the remaining electric energy Ebatr of the battery 54.

In the present embodiment, the battery-consumption suppressing control is executed, by increasing the generated electric power Wg generated by the first rotating machine MG1 as the vehicle electric generator, to an amount larger than in the case without the program update request. Thus, it is possible to appropriately suppress reduction of the remaining electric energy Ebatr of the battery 54.

In the present embodiment, the battery-consumption suppressing control is executed, by inhibiting the idling stop control of the engine 14. Thus, it is possible to appropriately suppress reduction of the remaining electric energy Ebatr of the battery 54.

In the present embodiment, the update of the vehicle program 91 is executed when the vehicle 10 is stopped and is placed in the state in which the drive torque is not generatable by the vehicle 10, and the battery-consumption suppressing control is executed after the program update request has been issued and before the update of the vehicle program 91 is started. Therefore, it is possible to avoid shortage of the remaining electric energy Ebatr remaining in the battery 54 during execution of the update of the vehicle program 91 which is made during stop of the vehicle 10 during which the remaining electric energy Ebatr of the battery 54 could be insufficient.

While the preferred embodiment of this invention has been described in detail by reference to the drawings, it is to be understood that the invention may be otherwise embodied.

For example, in the above-described embodiment, the electronic control apparatus 90 and the first and second gateway ECUs 110, 120 cooperate to constitute the control apparatus that is configured at least to execute the update of the vehicle program 91. However, this is not essential. For example, all of the remaining-electric-energy reduction suppressing portion 96, remaining-electric-energy determining portion 98 and program updating portion 112 may be provided in the electronic control apparatus 90, or may be provided in the first gateway ECU 110. Further, all or at least one of the remaining-electric-energy reduction suppressing portion 96, remaining-electric-energy determining portion 98 and program updating portion 112 may be provided in the server 200.

In the above-described embodiment, the update of the vehicle program 91 is executed when the vehicle 10 is stopped and is placed in the state of ignition OFF. However, the update of the vehicle program 91 may be executed when the vehicle 10 is placed in a state of ignition ON. For example, the update of the vehicle program 91 may be executed when the vehicle 10 is placed in the state of ignition ON and is running.

In the above-described embodiment, it is determined whether the battery-consumption suppressing control needs to be executed or not, depending on whether the remaining-electric-energy update-start estimated value Ebatrude is smaller than the update-required remaining electric energy Ebatrudn or not. However, for example, when the running route of the vehicle 10 is unknown, namely, when the remaining-electric-energy update-start estimated value Ebatrude cannot be calculated, a current value of the remaining electric energy Ebatr of the battery 54 may be used in place of the remaining-electric-energy update-start estimated value Ebatrude.

In the above-described embodiment, when it is determined that there is the request for the data update, it is determined whether the battery-consumption suppressing control needs to be executed or not. However, for example, when it is determined that there is the request for the data update, the battery-consumption suppressing control may be executed irrespective of whether the battery-consumption suppressing control needs to be executed or not. In this modified arrangement, too, it is possible to avoid shortage of the remaining electric energy Ebatr of the battery 54 during execution of the update of the vehicle program 91. In this sense, step S20 does not have to be necessarily implemented in the control routine shown in the flow chart of FIG. 7.

In the above-described embodiment, the vehicle 10 as the hybrid vehicle has been described by way of example of the vehicle to which the present invention is applied. However, the vehicle does not necessarily have to be a hybrid vehicle. For example, the present invention is applicable also to a so-called plug-in-hybrid vehicle in which the battery 54 can be charged with an electric power supplied from an external power source such as a charging station and a household power. In general, as compared with in the hybrid vehicle, in the plug-in-hybrid vehicle, a region in which the charged state value SOC is larger than the SOC target value is wider so that there could be more opportunities of continuing the motor running, reducing the charged state value SOC until the charged state value SOC is reduced to the SOC target value. Therefore, in the plug-in-hybrid vehicle, the execution of the battery-consumption suppressing control by changing the SOC target value of the battery 54 from the no-data-update SOC target value a to the data-update SOC target value c, is more useful.

Further, in the present invention is applicable also to an engine vehicle having only an engine as the vehicle drive-force source. Unlike in the hybrid vehicle, in the engine vehicle, the battery-consumption suppressing control cannot be executed by changing the SOC target value of the vehicle electric-storage device, and the battery-consumption suppressing control cannot be executed by inhibiting the motor running or limiting the region of the motor running. However, in the engine vehicle, the battery-consumption suppressing control can be executed, for example, by increasing an electric power generated by an alternator serving as the vehicle electric generator and/or by inhibiting the idling stop control of the engine that drives the alternator.

It is to be understood that the embodiment described above is given for illustrative purpose only, and that the present invention may be embodied with various modifications and improvements which may occur to those skilled in the art.

### NOMENCLATURE OF ELEMENTS

- 10:: vehicle
- 14:: engine (vehicle drive-force source)
- 54:: battery (vehicle electric-storage device)
- 90:: electronic control apparatus (control apparatus)
- 91:: vehicle program
- 96:: remaining-electric-energy reduction suppressing portion
- 98:: remaining-electric-energy determining portion
- 110:: first gateway ECU (control apparatus)
- 112:: program updating portion
- 120:: second gateway ECU (control apparatus)
- 200:: server (external device)
- 202:: new program
- MG1:: first rotating machine (vehicle electric generator)
- MG2:: second rotating machine (vehicle electric motor)
- R:: radio communication

## Claims

1. A control apparatus (90, 110, 120) for a vehicle (10), the control apparatus (90, 110, 120) comprising:
a program updating portion (112) configured to update a vehicle program (91) to a new program (202) received via a radio communication (R) from an external device (200) that is provided outside the vehicle (10); and
a remaining-electric-energy reduction suppressing portion (96) configured, when there is a program update request requesting the vehicle program (91) to be updated to the new program (202), to execute a control for suppressing reduction of a remaining electric energy (Ebatr) remaining in a vehicle electric-storage device (54) configured to supply an update-consumed electric energy (Econud) that is an electric energy consumed when the vehicle program (91) is being updated to the new program (202).

2. The control apparatus (90, 110, 120) according to claim 1, further comprising a remaining-electric-energy determining portion (98) configured, when there is the program update request requesting the vehicle program (91) to be updated to the new program (202), to determine whether the remaining electric energy (Ebatr) remaining in the vehicle electric-storage device (54) is not smaller than an update-required remaining electric energy (Ebatrudn) that includes the update-consumed electric energy (Econud) that is required when the vehicle program (91) is to be updated to the new program (202),
wherein the remaining-electric-energy reduction suppressing portion (96) is configured to execute the control for suppressing the reduction of the remaining electric energy (Ebatr), when the remaining-electric-energy determining portion (98) determines that the remaining electric energy (Ebatr) is smaller than the update-required remaining electric energy (Ebatrudn).

3. The control apparatus (90, 110, 120) according to claim 2,
wherein the remaining-electric-energy determining portion (98) is configured to calculates an estimated value of the remaining electric energy (Ebatr) that is changed depending on a running route of the vehicle (10) and operations made by a driver of the vehicle (10), and
wherein the remaining-electric-energy determining portion (98) is configured to use the estimated value (Ebatrude) of the remaining electric energy (Ebatr) at a point of time of start of update of the vehicle program (91) to the new program (202), as the remaining electric energy (Ebatr) that is to be compared with the update-required remaining electric energy (Ebatrudn).

4. The control apparatus (90, 110, 120) according to claim 2 or 3, wherein the remaining-electric-energy determining portion (98) is configured to calculate an estimated value (Econude) of the update-consumed electric energy (Econud), based on an amount of update data in the new program (202), and to calculate, as the update-required remaining electric energy (Ebatrudn), a value obtained by adding the estimated value (Econude) of the update-consumed electric energy (Econud) to a normally-required remaining electric energy (Ebatrnon) that is the remaining electric energy (Ebatr) required in a normal case without the program update request requesting the vehicle program (91) to be updated to the new program (202).

5. The control apparatus (90, 110, 120) according to claim 4,
wherein the remaining-electric-energy reduction suppressing portion (96) is configured to execute the control for suppressing the reduction of the remaining electric energy (Ebatr), by changing a target value (Ebatrt) of the remaining electric energy (Ebatr), from the normally-required remaining electric energy (Ebatrnon) to the update-required remaining electric energy (Ebatrudn), and controlling the remaining electric energy (Ebatr) such that an actual value of the remaining electric energy (Ebatr) is not smaller than the target value (Ebatrt) of the remaining electric energy (Ebatr).

6. The control apparatus (90, 110, 120) according to any one of claims 1-4,
wherein the remaining-electric-energy reduction suppressing portion (96) is configured to execute the control for suppressing the reduction of the remaining electric energy (Ebatr), by inhibiting a motor running of the vehicle (10) using an output torque of a vehicle electric motor (MG2) that is to be driven by an electric power outputted from the vehicle electric-storage device (54), or by limiting a region of the motor running.

7. The control apparatus (90, 110, 120) according to any one of claims 1-4,
wherein the remaining-electric-energy reduction suppressing portion (96) is configured to execute the control for suppressing the reduction of the remaining electric energy (Ebatr), by increasing an electric power generated by a vehicle electric generator (MG1) that is configured to charge the vehicle electric-storage device (54), to an amount larger than in a case without the program update request requesting the vehicle program (91) to be updated to the new program (202).

8. The control apparatus (90, 110, 120) according to any one of claims 1-4,
wherein the remaining-electric-energy reduction suppressing portion (96) is configured to execute the control for suppressing the reduction of the remaining electric energy (Ebatr), by inhibiting an idling stop control that is to be executed to temporarily stop an operation of an engine (14) which is a vehicle drive-force source (14) and which is to be operated to drive a vehicle electric generator (MG1) so as to charge the vehicle electric-storage device (54) with an electric power generated by the vehicle electric generator (MG1).

9. The control apparatus (90, 110, 120) according to any one of claims 1-8,
wherein the program updating portion (112) is configured to update the vehicle program (91) to the new program (202), when the vehicle (10) is stopped and is placed in a state in which a drive torque is not generatable by the vehicle (10), and
wherein the remaining-electric-energy reduction suppressing portion (96) is configured to execute the control for suppressing the reduction of the remaining electric energy (Ebatr), after the program update request has been issued and before update of the vehicle program (91) is started.
